# EUROPEAN PATENT APPLICATION

(11) **EP 3 715 802 A1**
(43) Date of publication of application: **30.09.2020**
(21) Application number: 20162623.1
(22) Date of filing: 12.03.2020
(51) Int. Cl.: G01H 1/00, G01M 13/028, G01P 3/481

(54) **METHODS OF MONITORING VIBRATION AND TRIM BALANCE USING SPEED PROBES**

(30) Priority: 26.03.2019 GB 201904123
(71) Applicant: Rolls-Royce plc, London N1 9FX (GB)
(72) Inventor: Shepherd, Robert, Derby, Derbyshire DE24 8BJ (GB)
(74) Representative: Rolls-Royce plc

(57) **Abstract**

A method of obtaining vibration data relating to a rotating shaft, the method comprising the steps of: receiving an output of a speed probe (60 or 160) adjacent a phonic wheel (58 or 158) coaxially coupled to a rotating shaft (52 or 152), the speed probe being configured to produce an output with a magnitude dependent upon a distance between the speed probe and the phonic wheel; determining an amplitude modulation of the output; and deriving vibration data relating to the rotating shaft from the determined amplitude modulation.

## Description

The present disclosure relates to a system and method for obtaining vibration data relating to a rotating shaft. In particular, the present disclosure relates to systems and methods performed in gas turbine engines.

In aircraft propelled by gas turbine engines, vibration monitoring is typically performed using a dedicated vibration sensor mounted to the component of interest or a component connected thereto. Vibration of the engine shaft can be measured by an accelerometer or strain gauge mounted to the engine casing. Measured vibration data can be used by aircraft systems operable to balance the shaft of the engine.

However, if the dedicated vibration sensor fails (for example, due to harsh environmental conditions) it is no longer possible to use vibration data to balance the engine shaft. If this happens mid-flight the aircraft may be forced to proceed for considerable time with an out-of-balance rotor. This is undesirable, as an out-of-balance rotor can cause damage to the engine.

According to a first aspect there is provided a method of obtaining vibration data relating to a rotating shaft, the method comprising the steps of:
receiving an output of a speed probe adjacent a phonic wheel coaxially coupled to a rotating shaft, the speed probe being configured to produce an output with a magnitude dependent upon a distance between the speed probe and the phonic wheel;
determining an amplitude modulation of the output; and
deriving vibration data relating to the rotating shaft from the determined amplitude modulation.

Optionally, the step of determining an amplitude modulation of the output comprises fitting an envelope curve to the output and determining an amplitude modulation of the output based on the envelope curve.

Optionally, the speed probe is a variable reluctance sensor.

Optionally, the rotating shaft is supported on a moveable bearing assembly, and the method further comprising the step of:
moving the bearing assembly based on the derived vibration data to reduce vibration of the rotating shaft.

Optionally, the step of moving the bearing assembly based on the derived vibration data to reduce vibration of the rotating shaft comprises moving the bearing assembly in a direction perpendicular to an axis of rotation of the rotating shaft.

Optionally, the step of moving the bearing assembly based on the derived vibration data to reduce vibration of the rotating shaft comprises moving the bearing assembly in a two dimensional plane orthogonal to an axis of rotation of the rotating shaft.

Optionally, the rotating shaft is provided with a dedicated vibration monitor separate from the speed probe, and the method further comprising the step of:
detecting when a fault has occurred in the dedicated vibration monitor,
wherein the steps of determining an amplitude modulation of the output of the speed probe, and deriving vibration data relating to the rotating shaft from the determined amplitude modulation are carried out responsive to a detection of a fault in the dedicated vibration monitor.

According to a first aspect there is provided a system for obtaining vibration data relating to a rotating shaft, the system comprising:
a speed probe adjacent a phonic wheel coaxially coupled to a rotating shaft, the speed probe being configured to produce an output, wherein the magnitude of the output is dependent upon a distance between the speed probe and the phonic wheel; and
a controller configured to:
   receive the output of the speed probe;
   determine an amplitude modulation of the speed probe output; and
   derive vibration data relating to the rotating shaft from the determined amplitude modulation.

Optionally, the controller is configured to fit an envelope curve to the output and determine an amplitude modulation of the speed probe output based on the envelope curve.

Optionally, the speed probe is a variable reluctance sensor.

Optionally, the rotating shaft is supported on a moveable bearing assembly, and the system further comprises an actuator connected to the bearing assembly, the actuator being communicatively coupled to the controller and configured to extend and retract along an actuator axis based on a movement signal received from the processor,
wherein extension and retraction of the actuator along the actuator axis causes movement of a centre of rotation of the moveable bearing assembly along the actuator axis, and
wherein the controller is configured to transmit a movement signal to the actuator based on the derived vibration data to reduce vibration of the rotating shaft.

Optionally, the system further comprises a second actuator communicatively coupled to the controller and configured to extend and retract along a second actuator axis based on a movement signal received from the processor, wherein extension and retraction of the second actuator along the second actuator axis causes movement of a centre of rotation of the moveable bearing assembly along the second actuator axis, wherein the controller is configured to transmit a movement signal to the actuator based on the derived vibration data to reduce vibration of the rotating shaft, and wherein the actuator axis and second actuator axis are arranged in a two dimensional plane and are separated from one another by a separation angle.

Optionally, the rotating shaft is provided with a dedicated vibration monitor separate from the speed probe, and the controller is configured to:
detect when a fault has occurred in the dedicated vibration monitor,
wherein the controller performs the steps of determining an amplitude modulation of the output of the speed probe, and deriving vibration data relating to the rotating shaft from the determined amplitude modulation responsive to a detection of a fault in the dedicated vibration monitor.

According to a third aspect there is provided gas turbine engine for an aircraft comprising:
an engine core comprising a turbine, a compressor, and a core shaft connecting the turbine to the compressor;
a fan located upstream of the engine core, the fan comprising a plurality of fan blades;
a gearbox that receives an input from the core shaft and outputs drive to the fan so as to drive the fan at a lower rotational speed than the core shaft; and
a system according to the second aspect, wherein the rotating shaft is the core shaft of the engine core.

Optionally, the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8.. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all values being dimensionless). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance - between top of climb and start of descent. Cruise conditions thus define an operating point of, the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a schematic sectional side view of a gas turbine engine in accordance with an embodiment of the invention;
**Figure 5** is cross-sectional view of a phonic wheel and speed probe assembly; and
**Figure 6** is a graph showing the outputs of the speed probe and the dedicated vibration monitor of Figure 4 against time.
**Figure 7** shows a flowchart illustrating the steps of a method in accordance with an embodiment of the invention.

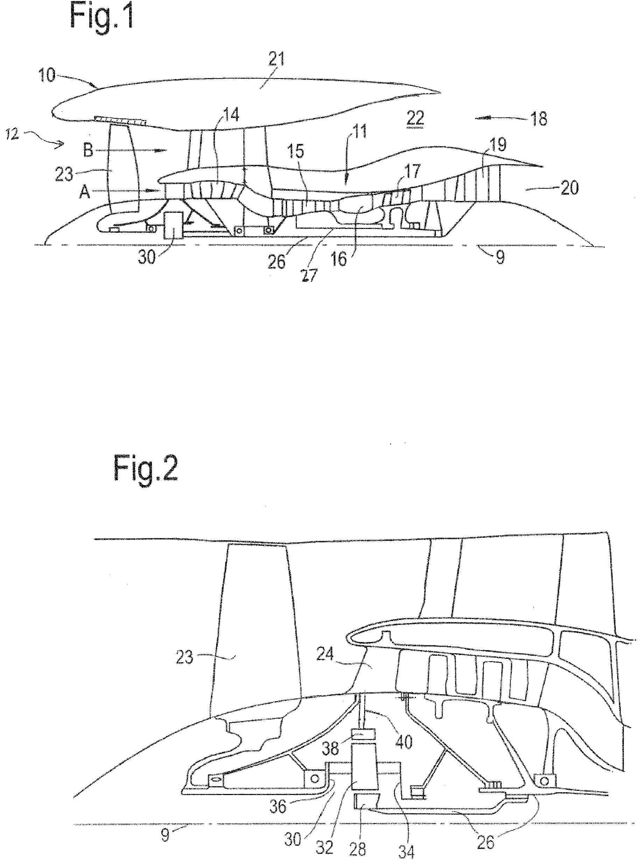

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

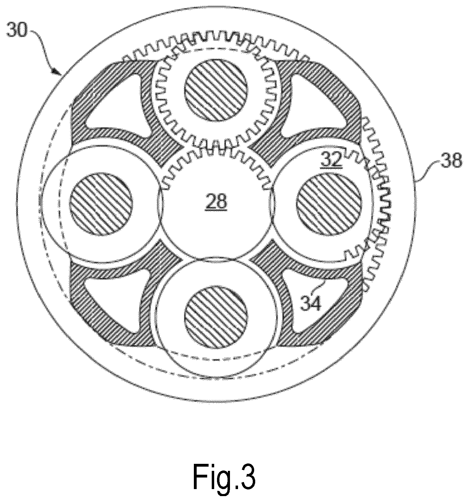

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

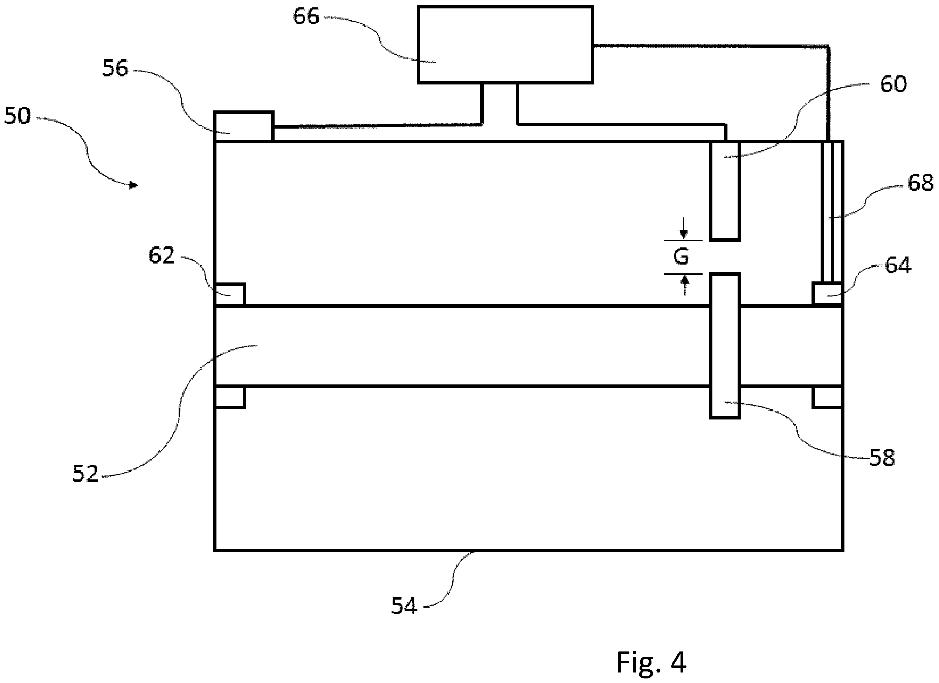

**Figure 4** schematically shows a partial side cross sectional view of a gas turbine engine 50 according to an embodiment of the invention, which may be an engine as described above with respect to Figures 1-3.

The engine 50 comprises a rotatable shaft 52 supported in a support structure 54, such as an intercase (a principal support structure in a gas turbine engine which supports one or more shafts of the engine). A dedicated vibration monitor 56 is provided on the support structure 54 to obtain vibration data relating to the rotatable shaft 52 in use. The dedicated vibration monitor 56 is an accelerometer, but alternative suitable monitors could be used in other examples (e.g. a strain gauge).

A phonic wheel 58 is provided on the rotatable shaft 52. The phonic wheel 58 is arranged coaxially with the rotatable shaft 52 and attached to the rotatable shaft 52, such that rotation of the rotatable shaft causes rotation of the phonic wheel 58. A phonic wheel is a structure connected to, or integrally formed with, a rotatable shaft that has formations or substructures (such as teeth) capable of being detected by a speed probe to determine the rotational speed of the wheel, and hence the shaft to which the wheel is attached.

A speed probe 60 is provided on the support structure 54 adjacent the rotatable shaft 52, and configured to produce an output relating to the speed of rotation of the rotatable shaft 52 by sensing rotation of the phonic wheel 58. There is an air gap G between the speed probe 60 and the phonic wheel 58.

The rotatable shaft 52 is supported in the support structure 54 by a first bearing assembly 62 attached to the support structure 54 and a second bearing assembly 64 attached to the support structure 54. In the example of Figure 4, the second bearing assembly 64 is a moveable bearing assembly capable of movement to reposition the centre of rotation of the second bearing assembly 64, for example to balance a bowed rotor.

An actuator 68 is configured to act between the support structure 54 and the second bearing assembly 64. The actuator 68 is capable of extending or retracting along an actuator axis. Extension and retraction of the actuator 68 along the actuator axis causes a corresponding movement of the second bearing assembly 64. Said movement may be used to reposition the centre of rotation of the second bearing assembly 64 to balance the rotatable shaft 52.

In the example shown in Figure 4, the actuator axis is arranged perpendicular to the axis of rotation of the rotatable shaft 52. In other examples, the actuator axis may be arranged at any angle that is non-parallel with the axis of rotation of the rotatable shaft 52, provided that at least a component of the extension and retraction of the actuator 68 displaces the bearing assembly in a direction perpendicular to the axis of rotation of the rotatable shaft 52.

In some examples, two actuators may be arranged with actuator axes on the same two dimensional plane separated from one another by a separation angle. Such an arrangement can be used to reposition the centre of rotation of the second bearing assembly 64 in two dimensions. For example, the two dimensional plane may be a plane orthogonal to the axis or rotation of the rotatable shaft 52, and the two actuator axes may be separated by a separation angle of 90°. The first actuator may reposition the centre of rotation of the second bearing assembly 64 in a first direction (e.g. an x-axis of the two dimensional plane) and the second actuator may reposition the centre of rotation of the second bearing assembly in a second direction (e.g. a y-axis of the two dimensional plane).

In the example shown in Figure 4, only one of the bearing assemblies 62, 64 is a movable bearing assembly. In other examples, both of the bearing assemblies may be moveable, and each may have its own associated actuator or actuators arranged to effect repositioning of its centre of rotation.

The dedicated vibration monitor 56 is communicatively coupled to a controller 66. The controller 66 is configured to receive vibration data output by the dedicated vibration monitor. The controller 66 is communicatively coupled to the or each actuator 68, and is configured to produce output signals capable of effecting extension or retraction of the or each actuator 68 to cause a corresponding repositioning of the centre of rotation of the second bearing assembly 64.

During operation, the controller 66 monitors the vibration data from the dedicated vibration monitor 56 and, if determined to be necessary, effects extension or retraction of the actuator 68. The processor 66 operates in a feedback loop to minimize the magnitude of the vibration detected by the dedicated vibration monitor 56, i.e. if extension of the actuator 68 is determined to lead to an increase in the magnitude of the vibration detected then extension is halted and retraction of the actuator 68 is effected, and vice versa.

The controller 66 is configured to detect faults in the dedicated vibration monitor 56. In previously considered arrangements, if a fault were to occur in a dedicated vibration sensor then a shaft balancing process described above would no longer be possible as the processor would not have access to vibration data.

In the arrangement shown in Figure 4 the speed probe 60 is communicatively coupled to the controller 66. The controller 66 is configured to derive vibration data relating to vibration of the shaft based on an output received from the speed probe 60. The controller 66 is configured to use such derived vibration data in the shaft balancing process described above.

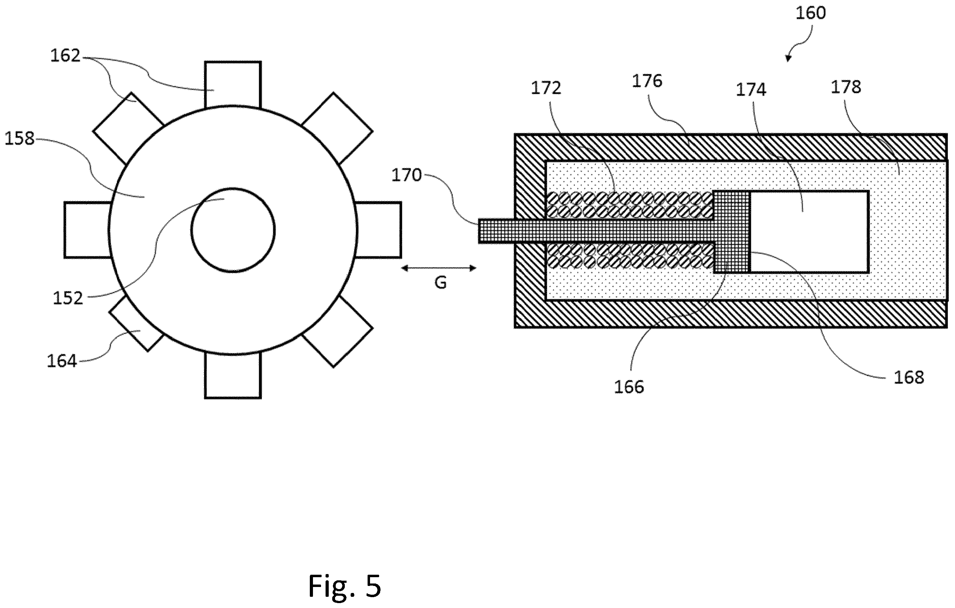

**Figure 5** schematically shows a cross-sectional view of a phonic wheel and speed probe arrangement suitable for use in the gas turbine engine described above with respect to Figure 4.

A phonic wheel 158 is coaxially coupled to a rotatable shaft 152. The phonic wheel 158 comprises a plurality of teeth around its circumference (two teeth are indicated at 162). One of the plurality of teeth is a short tooth 164. The plurality of teeth project the same distance away from the rotatable shaft 152, except for the short tooth 164 which projects a shorter distance away from the rotatable shaft 152. While the phonic wheel 158 shown in Figure 5 comprises eight teeth (including the short tooth 164), phonic wheels may comprise any number of teeth in practice.

A speed probe 160 is disposed adjacent the rotatable shaft 152. In this example, the speed probe 160 is a variable reluctance sensor. The variable reluctance sensor comprises a magnetic pole piece 166. The magnetic pole piece 166 has a back face 168 and a front face 170. An electrically conductive wire 172 is repeatedly wound around the magnetic pole piece 166. A permanent magnet 174 is disposed adjacent the back face 168 of the magnetic pole piece 166. The front face 170 is positioned adjacent the teeth 162 of the phonic wheel 158 in use. The magnetic pole piece 166, wire 172 and permanent magnet 174 are contained within a housing 176, which is filled with a filler material 178. The housing 176 may be attached to a support structure of a gas turbine engine, such as the support structure 54 shown in Figure 4.

The speed probe 160 is operable to produce an output having the following properties:
i) the magnitude of the output is directly proportional to the shaft speed; and
ii) the magnitude of the output is inversely proportional to the airgap between the speed probe and the phonic wheel.

The output varies according to the passage of the teeth 162 past the front face 170 of the speed probe 160, and includes local maxima and minima corresponding to each tooth. Over time, there may be variations between successive local maxima and local minima even when the corresponding teeth are identical (e.g. owing to vibration of the rotatable shaft). However, when the short tooth 164 passes the speed probe 160 the associated local maxima or local minima is significantly different from those associated with the other teeth, such that there will be a discontinuous (i.e. sudden) change, i.e. a step change, in the profile of the local maxima or local minima.

In the following discussion it will be assumed that the rotatable shaft 152 rotates at a constant speed. This can be confirmed by a controller receiving the output of the speed probe 160 and determining the frequency at which the short tooth 164 passes (for example, by detecting a change, such as a step change, in the speed probe output corresponding to the short tooth 164 passing the speed probe 160). As the short tooth 164 passes the speed probe 160 once per revolution, constant rotational speed can be established over time periods for which the delay between successive detections of the short tooth 164 is identical.

The rotatable shaft 152 vibrates as it rotates such that the support structure in which the shaft is supported and the rotatable shaft act as a spring-mass-damper system and exhibit harmonic motion.

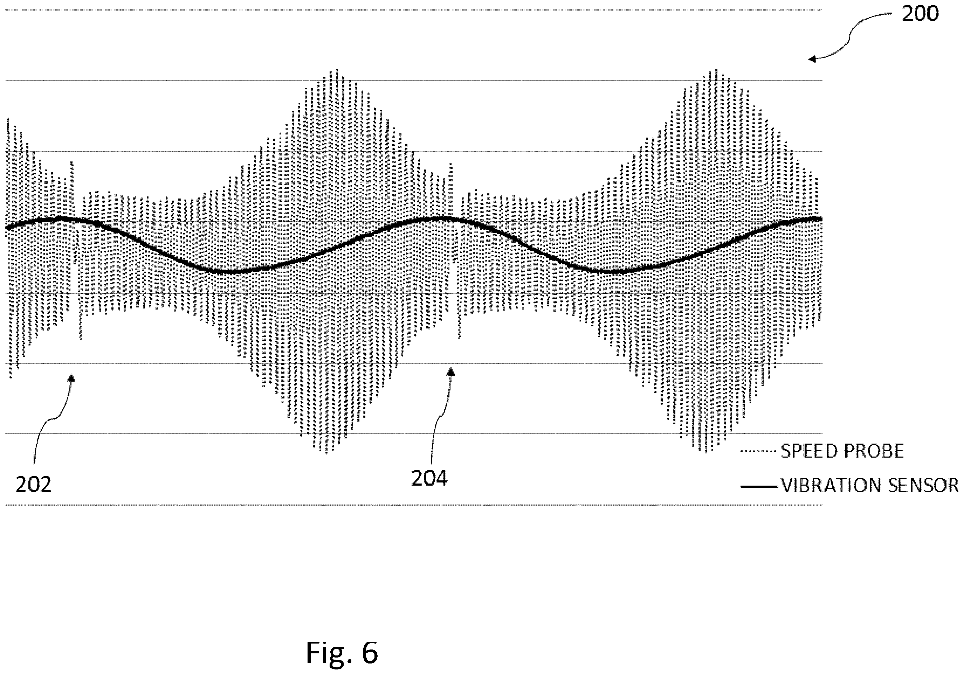

**Figure 6** shows a graph 200 showing the outputs of the speed probe and the dedicated vibration monitor of Figure 4 against time.

A step change in the magnitude of the output of the speed probe associated with the short tooth of the phonic wheel passing the speed probe is indicated at 202 and 204. As discussed above, these points can be used to establish a constant rotational speed of the rotatable shaft.

It can be seen that the speed probe output is amplitude modulated, i.e. even though each of the teeth (ignoring the short tooth) of the phonic wheel are the same length as each other, there are variations in magnitude between the local maxima and local minima associated with each of the teeth. The variation in magnitude relates to a variation in the distance between the speed probe and the teeth, with some of the teeth being nearer to the speed probe (resulting in a larger speed probe output) and other teeth being further from the speed probe (generating a smaller speed probe output), reflecting that the air gap between the phonic wheel varies based on the vibration caused by the rotation of the shaft.

It can be further seen that this amplitude modulation has a period corresponding to a full rotation of the phonic wheel, and hence a full rotation of the rotatable shaft. If an envelope is fitted to the speed probe output, the envelope has the same magnitude at each short tooth passing point.

In this example the output of the dedicated vibration sensor can be seen to be a simple sinusoidal waveform. The period of the vibration sensor output waveform corresponds to a full rotation of the phonic wheel, and hence a full rotation of the rotatable shaft. Other waveforms may be present at higher harmonic orders.

In this example, the envelope of the speed probe output and the vibration sensor output waveform are phase-shifted with respect to one another. However, the controller is configured to control the or each actuator to move the position of the moveable bearing in a control loop to minimise a maximum magnitude of shaft vibration, such that it is not necessary to consider the transient variation of the shaft position. The phase-shift of the waveforms is therefore disregarded for the purposes of shaft balancing.

In the present example, the controller receives the output of the speed probe and derives a phase-shifted vibration waveform from the speed probe output. In this particular example, the vibration waveform is derived by fitting an envelope to the speed probe output and selecting a sinusoidal curve with a maximum corresponding in time to the envelope maximum value, a minimum corresponding in time to the envelope minimum value, and a period corresponding to the time between successive detections of the short tooth. However, it will be appreciated that any suitable signal processing technique may be used to derive the vibration waveform.

The phase-shifted vibration waveform may also have a different amplitude to the vibration sensor output waveform, but its amplitude will nevertheless be proportional to the vibration sensor output waveform. Therefore, the phase-shifted vibration waveform can be used in a shaft balancing process.

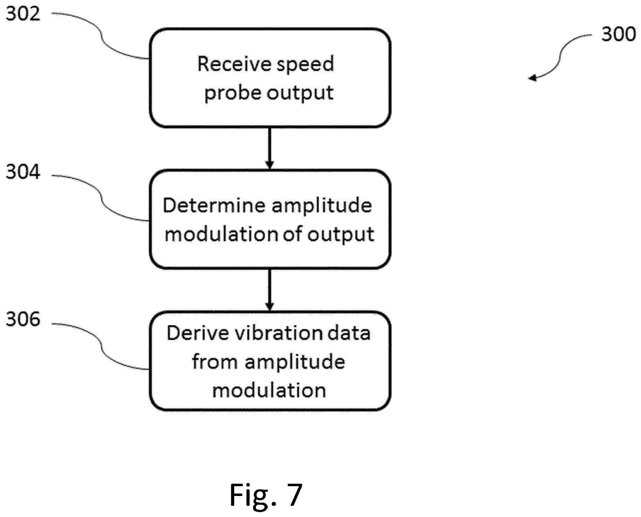

**Figure 7** shows a flowchart 300 illustrating a method in accordance with an embodiment of the present invention.

In step 302 the output of a speed probe is received, for example by a controller. As discussed above, any suitable speed probe may be used in the method of the present invention provided that it is located adjacent a phonic wheel coaxially coupled to a rotating shaft and is configured to produce an output with a magnitude dependent upon a distance between the speed probe and the phonic wheel.

In step 304 an amplitude modulation of the speed probe output is determined, for example by the controller. The amplitude modulation can be variations in local maxima and local minima corresponding to the passage of teeth of the phonic wheel past the speed probe wherein, in the absence of any variations in the distance between the speed probe and the phonic wheel, the local maxima and local minima would be identical for identical teeth.

In step 306 vibration data is derived from the determined amplitude modulation, for example by the controller. The derivation of vibration data may take place by any suitable signal processing means. For example, an envelope curve may be fitted to the speed probe output and a sinusoidal curve may be fitted to the envelope curve.

Deriving vibration data from the speed probe output allows for a level of redundancy to obtain vibration data should the dedicated vibration monitor(s) fail. While the derived vibration data in the present example has a lower sampling rate compared to vibration data from a dedicated vibration monitor, it has been found nevertheless to be sufficient for the purposes of shaft balancing in a gas turbine engine. Speed probes are often capable of operating in harsher environments than vibration monitors, as piezoelectric material used in vibration monitors, such as accelerometers, is typically only capable of reliably operating within a limited temperature range. Consequently, in many cases, speed probe data may continue to be available when a vibration monitor fails due to environmental conditions. The present invention also allows a dedicated vibration monitor to be omitted entirely in a gas turbine engine.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

For example, while the example described above with respect to the Figures uses a phonic wheel which a separate component coaxially coupled to the rotatable shaft, in other examples a phonic wheel integrally formed with the rotatable shaft could be used.

As a further example, while the example described above with respect to the Figures uses a variable reluctance sensor as the speed probe, any suitable speed probe could be used in practice, i.e. any speed probe sensitive to the size of the air gap between the speed probe and the wheel. Examples of suitable speed probes include Hall-effect sensors, proximity sensors, optical distance sensors and sonic / ultrasonic distance sensors.

As a further example, while in the method described above the step of determining an amplitude modulation of the speed probe output comprised fitting an envelope curve to the output, any suitable signal processing technique could be used to determine an amplitude modulation of the speed probe output. For example, Fourier analysis or order tracking.

While the example described above uses the derived vibration data in an active shaft balancing process for a bowed rotor, i.e. a process in which the shaft is balanced during rotation of the rotating shaft (e.g. by displacing a moveable bearing assembly supporting the shaft), it is also envisaged that the derived vibration data could be used in any other shaft balancing process for any type of unbalanced shaft. For example, the vibration data could be used in a shaft balancing process in which the derived vibration data is observed during rotation of the shaft. The shaft may then be stopped and balance weights applied to the shaft. The shaft can then be rotated and the resultant effect on the derived vibration data observed. These steps can be repeated until the derived vibration data indicates that vibration of the shaft has been minimized.

## Claims

1. A method of obtaining vibration data relating to a rotating shaft, the method comprising the steps of:
receiving an output of a speed probe (60 or 160) adjacent a phonic wheel (58 or 158) coaxially coupled to a rotating shaft (52 or 152), the speed probe being configured to produce an output with a magnitude dependent upon a distance between the speed probe and the phonic wheel;
determining an amplitude modulation of the output; and
deriving vibration data relating to the rotating shaft from the determined amplitude modulation.

2. The method as claimed in claim 1, wherein the step of determining an amplitude modulation of the output comprises fitting an envelope curve to the output and determining an amplitude modulation of the output based on the envelope curve.

3. The method as claimed in claim 1 or claim 2, wherein the speed probe (60 or 160) is a variable reluctance sensor.

4. The method as claimed in any preceding claim, wherein the rotating shaft (52 or 152) is supported on a moveable bearing assembly (64), the method further comprising the step of:
moving the bearing assembly based on the derived vibration data to reduce vibration of the rotating shaft.

5. The method as claimed in claim 4, wherein the step of moving the bearing assembly (64) based on the derived vibration data to reduce vibration of the rotating shaft (52 or 152) comprises moving the bearing assembly in a direction perpendicular to an axis of rotation of the rotating shaft.

6. The method as claimed in claim 4, wherein the step of moving the bearing assembly (64) based on the derived vibration data to reduce vibration of the rotating shaft (52 or 152) comprises moving the bearing assembly with two degrees of freedom in a two dimensional plane orthogonal to an axis of rotation of the rotating shaft.

7. The method as claimed in any preceding claim, wherein the rotating shaft (52 or 152) is provided with a dedicated vibration monitor (56) separate from the speed probe (60 or 160), the method further comprising the step of:
detecting when a fault has occurred in the dedicated vibration monitor,
wherein the steps of determining an amplitude modulation of the output of the speed probe, and deriving vibration data relating to the rotating shaft from the determined amplitude modulation are carried out responsive to a detection of a fault in the dedicated vibration monitor.

8. A system for obtaining vibration data relating to a rotating shaft (52 or 152), the system comprising:
a speed probe (60 or 160) adjacent a phonic wheel (58 or 158) coaxially coupled to a rotating shaft, the speed probe being configured to produce an output, wherein the magnitude of the output is dependent upon a distance between the speed probe and the phonic wheel; and
a controller (66) configured to:
receive the output of the speed probe;
determine an amplitude modulation of the speed probe output; and
derive vibration data relating to the rotating shaft from the determined amplitude modulation.

9. The system as claimed in claim 8, wherein the controller (66) is configured to fit an envelope curve to the output and determine an amplitude modulation of the speed probe (60 or 160) output based on the envelope curve.

10. The system as claimed in claim 8 or claim 9, wherein the speed probe (60 or 160) is a variable reluctance sensor.

11. The system as claimed in any one of claims 8 to 10, wherein the rotating shaft (52 or 152) is supported on a moveable bearing assembly (64), and the system further comprises an actuator (68) connected to the bearing assembly, the actuator being communicatively coupled to the controller (66) and configured to extend and retract along an actuator axis based on a movement signal received from the processor,
wherein extension and retraction of the actuator along the actuator axis causes movement of a centre of rotation of the moveable bearing assembly along the actuator axis, and
wherein the controller is configured to transmit a movement signal to the actuator based on the derived vibration data to reduce vibration of the rotating shaft.

12. The system as claimed in claim 11, comprising a second actuator communicatively coupled to the controller (66) and configured to extend and retract along a second actuator axis based on a movement signal received from the processor, wherein extension and retraction of the second actuator along the second actuator axis causes movement of a centre of rotation of the moveable bearing assembly (64) along the second actuator axis, wherein the controller is configured to transmit a movement signal to the actuator based on the derived vibration data to reduce vibration of the rotating shaft (52 or 152), and wherein the actuator axis and second actuator axis are arranged in a two dimensional plane and are separated from one another by a separation angle.

13. The system as claimed in any one of claims 8 to 12, wherein the rotating shaft (52 or 152) is provided with a dedicated vibration monitor (56) separate from the speed probe (60 or 160), and the controller (66) is configured to:
detect when a fault has occurred in the dedicated vibration monitor,
wherein the controller performs the steps of determining an amplitude modulation of the output of the speed probe, and deriving vibration data relating to the rotating shaft from the determined amplitude modulation responsive to a detection of a fault in the dedicated vibration monitor.

14. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades;
a gearbox (30) that receives an input from the core shaft (26) and outputs drive to the fan so as to drive the fan at a lower rotational speed than the core shaft; and
the system as claimed in any one of claims 8 to 13, wherein the rotating shaft (52 or 152) is the core shaft of the engine core.

15. The gas turbine engine as claimed in claim 14, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.
